(19) **Europäisches Patentamt**
**European Patent Office**
**Office européen des brevets**

(11) **EP 2 098 832 B1**

(12) **EUROPEAN PATENT SPECIFICATION**

(45) Date of publication and mention
of the grant of the patent:
**28.10.2015 Bulletin 2015/44**

(51) Int Cl.:
***G01F 1/684*** *(2006.01)*   ***G01F 1/688*** *(2006.01)*
***G01F 15/10*** *(2006.01)*   ***G01F 15/18*** *(2006.01)*

(21) Application number: **09153266.3**

(22) Date of filing: **20.02.2009**

(54) **Flow rate sensor**

Durchflussmesser

Capteur de débit

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **05.03.2008 JP 2008054340**

(43) Date of publication of application:
**09.09.2009 Bulletin 2009/37**

(73) Proprietor: **Omron Corporation
Kyoto-shi, Kyoto 600-8530 (JP)**

(72) Inventors:
• **Ueda, Naotsugu
Kyoto-shi, Kyoto 600-8530 (JP)**

• **Kurose, Izumi
Kyoto-shi, Kyoto 600-8530 (JP)**
• **Nakao, Hideyuki
Kyoto-shi, Kyoto 600-8530 (JP)**
• **Eiji, Kazuhiro
Kyoto-shi, Kyoto 600-8530 (JP)**

(74) Representative: **Kilian Kilian & Partner
Aidenbachstraße 54
81379 München (DE)**

(56) References cited:
**EP-A2- 1 816 444       DE-A1-102004 021 304
US-A1- 2006 137 444   US-B1- 6 655 207**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

1. TECHNICAL FIELD

The present invention relates to flow rate sensors, specifically, to a flow rate sensor for measuring flow rate and flow velocity of a fluid such as gas and a liquid.

2. RELATED ART

(Flow Rate Sensor of Japanese Unexamined Patent Publication No. 2007-212199)

A flow rate sensor for measuring flow rate of a fluid is disclosed, for example, in Japanese Unexamined Patent Publication No. 2007-212199 (Patent Document 1). In such a flow rate sensor, part of the upper surface of a fluid flow path formed in a flow path body is opened into a recessed area of the flow path body, and a sensor chip is accommodated in the recessed area at the upper surface of the flow path body by way of an O-ring, as shown in FIGS. 2 and 3 of Japanese Unexamined Patent Publication No. 2007-212199. The sensor chip is pressed against the O-ring by a holding plate superimposed on the upper surface of the flow path body, the holding plate and the flow path body are integrally coupled by screwing a bolt to the flow path body from the upper surface of the holding plate, and the O-ring is sandwiched between the lower surface of the sensor chip and the recessed area to seal the periphery of the opening at the upper surface of the fluid flow path. A flow rate detector arranged at the lower surface of the sensor chip faces the opening at the upper surface of the fluid flow path, and the flow rate of the fluid flowing through the fluid flow path is measured by the flow rate detector.

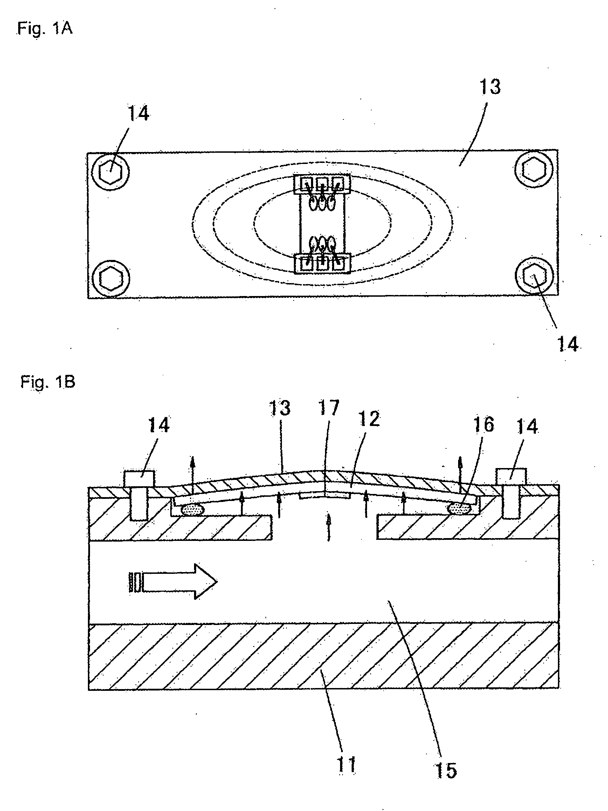

FIGS. 1A and 1B show a schematic plan view and a schematic cross-sectional view showing a flow rate sensor disclosed in Japanese Unexamined Patent Publication No. 2007-212199. In the flow rate sensor of Japanese Unexamined Patent Publication No. 2007-212199, a flow path body 11 accommodating a sensor chip 12 and a holding plate 13 are bound with a bolt 14 screwed in from the upper surface, and the four corners are fixed with the bolt 14 such that the bolts 14 do not project out to a fluid flow path 15. As shown in FIG. 1B, the head of the bolt 14 projects out to the upper surface of the holding plate 13, and as shown in FIG. 1A, a region (region of screw hole etc.) for fixing the bolt 14 is required at four corners of the holding plate 13 and the fluid path body 11 when seen from the upper surface side. Therefore, miniaturization of the flow rate sensor is difficult with the structure of Japanese Unexamined Patent Publication No. 2007-212199.

In the flow rate sensor of Japanese Unexamined Patent Publication No. 2007-212199, the four corners of the holding plate 13 are fixed with the bolt 14, and the sensor chip 12 configures part of the fluid flow path 15, and thus the sensor chip 12 and the holding plate 13 are subjected to elastic repulsive force from the pressure from the fluid and an O-ring 16, and distributed stress as shown with a broken line in FIG. 1A and with an arrow in FIG. 1B is applied on the sensor chip 12 and the holding plate 13. A dome-shaped warp thus produces as shown in FIG. 1B at the sensor chip 12 and the holding plate 13 by such stress. As a result, when miniaturizing or thinning the flow rate sensor, a flow path cross-sectional area may change by the displacement of the holding plate 13 thereby triggering property fluctuation, a wiring pattern on the sensor chip 12 may break by the stress applied to the central part of the sensor chip 12, or cracks may form in a flow rate detector 17 and the flow rate sensor may be damaged. In order to reduce the warp of the sensor chip 12 and reduce the damage of the flow rate sensor, an expensive substrate such as a ceramic substrate needs to be used, which increases the cost of the flow rate sensor.

Furthermore, in the flow rate sensor of Japanese Unexamined Patent Publication No. 2007-212199, the number of components increases as the bolt 14 is necessary, a step of tightening the bolt 14 increases in the assembly step, and the management of the tightening torque of the bolt 14 is necessary.

(Flow Rate Sensor of US Patent No. 665207)

Another flow rate sensor is as described in US Patent No. 665207 (Patent Document 2). In such a flow rate sensor, a flow tube is accommodated in a housing to form a fluid flow path, and a substrate base is superimposed on the flow tube such that a flow sensor arranged at the lower surface of the substrate base faces the opening at the upper surface of the flow tube. A cover is superimposed on the upper surface of the substrate base, which cover is fixed to the housing by hooking a notch-shaped notch arranged at the outer peripheral portion to a peg arranged on the side surface of the housing, and the substrate base and the flow tube are held down with the cover to ensure sealability.

FIG. 2 shows a view showing a structure of the flow rate sensor disclosed in US Patent No. 665207 in a simplified manner, where reference numeral 21 designates housing, 22 designates flow tube, 23 designates fluid flow path, 24 designates substrate base, 25 designates flow sensor, 26 designates opening at the upper surface of the flow tube, 27 designates cover, 28 designates notch, and 29 designates peg. In the flow rate sensor of such a structure, the assembling direction of the cover 27 and the displaceable direction of the substrate base 24 coincide in that both directions are vertical direction, and furthermore, since the notch 28 tends to become thin and fragile with miniaturization of the flow rate sensor, the substrate base 24 may displace in the vertical direction by the influence of the pressure of the fluid and the change in environment. If the substrate base 24 displaces in the vertical direction, the shape of the fluid flow path 23 may change or the position of the fluid flow path 23 may shift, whereby the properties of the flow rate sensor may change. The sealability of the fluid flow path 23 may not be ensured when the substrate base 24 lifts up.

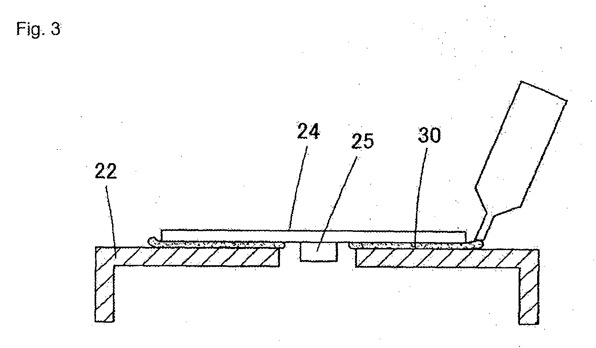

As shown in FIG. 3, there is considered a method of adhering the flow tube 22 and the substrate base 24 by applying an adhesive 30 between the flow tube 22 and the substrate base 24 of US Patent No. 665207. However, an adhesive application step is necessary in a step using the adhesive, and thus a man-hour increases. Furthermore, if the applied adhesive flows into the fluid flow path, the property of the flow rate sensor is influenced, which becomes the cause of production variability, and thus management of application amount is also necessary. Moreover, since a curing time for curing and drying the adhesive becomes long, the manufacturing efficiency lowers.

DE 10 2004 621 304 A1 discloses a flow rate sensor having a printed circuit board, on which a sensor is provided. The printed circuit board is mounted to a tube, which defines a bypass channel, by means of brackets, glue or screws, wherein a seal is arranged between the printed circuit board and the tube. Furthermore, a surge tank is provided in fluid communication with the main flow channel by means of an opening of the main flow channel, wherein the surge tank may be attached to the flow channel by welding. In other embodiments, in which the surge tank is filled with e.g. oil, the opening is sealed by a membrane in order to prevent the fluid of the flow channel from reaching the backside of the printed circuit board on which electronic devices are arranged.

US 2006/137444 A1 discloses a flow-velocity measuring device, wherein a front half member and a rear half member of a housing are integrally joined by inserting a press-fit member provided on the front half member into an engaging hole provided on the rear half member. In both half members storage sections for storing a substrate having a sensor arranged thereon are provided. The substrate is clamped in an upright position with respect to the joint surfaces of both half members by means of retaining grooves which engage the end surfaces of the substrate. Furthermore, auxiliary walls projecting from walls on the side opposite sensor openings are formed for pressing the substrate against the sensor opening. By this construction, the portion of the substrate around the sensor can be brought into tight contact with the outer wall of the sensor opening irrespective of the joining force of the half members.

SUMMARY

In view of the technical problems discussed above, it is an object of the present invention to provide a flow rate sensor that can be miniaturized, that can ensure strength of a housing, and that can alleviate stress applied on a substrate, and in which the number of components and the number of assembly steps are reduced thereby achieving lower cost.

The object is solved by the flow rate sensor according to claim 1.

Further preferred embodiments of the invention are defined by the dependent claims.

In accordance with one aspect, a flow rate sensor includes a base with a fluid flow path on the inside and a substrate installing surface, part of an upper surface of the fluid flow path being opened to the substrate installing surface; a seal member mounted on the substrate installing surface so as to surround the opening of the fluid flow path; a substrate mounted on the seal member and provided to cover the opening of the fluid flow path; a sensor chip arranged at a lower surface of the substrate so as to face the opening of the fluid flow path; and a cover attached to the base to configure a housing; wherein the cover and the base respectively includes an engagement portion and an engaging portion to be fitted to each other by moving the cover in a direction different from a direction the substrate pushes the seal member; and the cover includes a substrate holder for pushing the upper surface of the substrate in a pushing direction of the seal member.

In the flow rate sensor of the aspect, the opening of the fluid flow path can be reliably sealed by the substrate with the seal member sandwiched between the substrate and the substrate installing surface since the substrate on the seal member is pushed by the substrate holder. Furthermore, a housing of high strength can be configured by the cover and the base since the cover and the base are assembled by fitting the engagement portion and the engaging portion. Moreover, the engagement portion of the cover and the engaging portion of the base are fitted to each other to attach the cover to the base by moving the cover in the direction different from the direction of pushing the seal member of the substrate, and the upper surface of the substrate is pushed towards the pushing direction of the seal member with the substrate holder arranged on the cover, and thus the reactive force of the pushing force of the seal member barely acts in the direction of detaching the fitting of the engagement portion and the engaging portion, whereby the sealability of the fluid flow path is less likely to be affected. As the substrate barely lifts up, the cross-sectional area of the fluid flow path is less likely to change and the property change of the flow rate sensor can be suppressed.

In the flow rate sensor of the aspect, the engagement portion and the engaging portion for attaching the cover to the base are arranged on the cover and the base, respectively, and the substrate holder for holding down the substrate is also arranged on the cover, and thus a separate member is unnecessary to couple and integrate the cover and the base, a separate member for holding down the substrate is also unnecessary, and the number of members does not increase. Furthermore, miniaturization of the flow rate sensor is achieved as separate members are not required. The engagement portion and the engaging portion merely need to be fitted to assemble the cover and the base, and furthermore, the substrate holder pushes the upper surface of the substrate when the engagement portion and the engaging portion are fitted, whereby the assembly property of the flow rate sensor is also satisfactory.

In the flow rate sensor of the aspect, an adhesive is unnecessary for attaching the cover to the base, and thus the adhesive does not flow into the fluid flow path so that the property of the flow rate sensor is not affected.

Therefore, according to the flow rate sensor of the aspect, the strength of the housing can be ensured while achieving miniaturization of the flow rate sensor, and lower cost can be achieved by reducing the number of components and the number of assembly steps.

In accordance with another aspect of the flow rate sensor, the engagement portion and the engaging portion are fitted to each other by moving the cover in the direction parallel to the upper surface of the substrate. According to such an embodiment, the reactive force of the pushing force of the seal member does not act at all in the direction of detaching the fitting of the engagement portion and the engaging portion, and thus the sealability of the fluid flow path is barely affected. Furthermore, as the substrate lifts up, the cross-sectional area of the fluid flow path does not change, and the property of the flow rate sensor does not change. Moreover, in this embodiment, the substrate holder moves along the upper surface of the substrate when fitting the engagement portion and the engaging portion, and thus the cover and the base can be assembled while pushing the substrate with the substrate holder, and the assembly property becomes satisfactory.

In accordance with still another aspect of the flow rate sensor, a plurality of substrate holders each identical with the substrate holder is arranged on the cover. According to such an embodiment, the pushing force applied from the substrate holder to the substrate can be dispersed, and thus the deflection of the substrate by the reactive force of the seal member and the internal pressure can be reduced. Therefore, breaking of wiring pattern arranged on the substrate, formation of cracks in the sensor chip, and separation of an electronic component mounted on the substrate from the substrate are less likely to occur, and the durability of the flow rate sensor can be enhanced. Furthermore, the sealability of the fluid flow path further enhances since the substrate is less likely to deflect.

In accordance with yet another aspect of the flow rate sensor, a lower surface of a distal end of the substrate holder is subjected to chamfering. According to such an embodiment, when pushing the upper surface of the substrate with the substrate holder by sliding the substrate holder from the outer peripheral side of the substrate while attaching the cover to the base, the distal end of the substrate holder is less likely to be caught at the edge of the substrate, and the assembly property of the flow rate sensor enhances.

In accordance with yet another aspect of the flow rate sensor, at least one part of the engagement portion has a length at which the distal end of the substrate holder contacts the engaging portion before contacting the substrate when attaching the cover to the base. According to such an embodiment, the upper surface of the substrate can be pushed with the substrate holder by sliding the substrate holder from the outer peripheral side of the substrate after fitting at least one part of the engagement portion of the cover into the engaging portion of the base. Therefore, the pushing force by the substrate holder generates on the substrate from the moment the substrate holder touches the end of the substrate, whereby the assembly property of the flow rate sensor enhances.

In accordance with yet another aspect of the flow rate sensor, the substrate holder pushes the substrate at immediately above at least one part of the seal member. According to such an embodiment, the elastic repulsive force of the seal member can be reduced and canceled by holding down the seal member from above the substrate with the substrate holder, and thus the deflection of the substrate by the reactive force of the seal member can be reduced. Therefore, breaking of wiring pattern arranged on the substrate, formation of cracks in the sensor chip, and separation of the electronic component mounted on the substrate from the substrate are less likely to occur, and the durability of the flow rate sensor can be enhanced.

In accordance with yet another aspect of the flow rate sensor, the substrate holder pushes from one side to another side of the opposing sides of the upper surface of the substrate. According to such an embodiment, the pushing area of the substrate holder increases, and thus the pushing force applied on the substrate from the substrate holder can be dispersed, and the deflection of the substrate by the reactive force of the seal member and the internal pressure can be further reduced. Therefore, breaking of wiring pattern arranged on the substrate, formation of cracks in the sensor chip, and separation of the electronic component mounted on the substrate from the substrate are less likely to occur, and the durability of the flow rate sensor can be enhanced. Furthermore, the sealability of the fluid flow path further enhances since the substrate is less likely to deflect.

In accordance with yet another aspect of the flow rate sensor, a substrate holder for holding down the upper surface of the substrate is also arranged on the inner surface of the base. According to such an embodiment, the number of substrate holders can be increased, and thus the pushing force applied on the substrate from the substrate holder can be dispersed, and the deflection of the substrate by the reactive force of the seal member and the internal pressure can be further reduced. Therefore, breaking of wiring pattern arranged on the substrate, formation of cracks in the sensor chip, and separation of the electronic component mounted on the substrate from the substrate are less likely to occur, and the durability of the flow rate sensor can be enhanced. Furthermore, the sealability of the fluid flow path further enhances since the substrate is less likely to deflect.

The means for solving the problems in the present invention have features appropriately combining the above-described components, where the present invention encompasses great number of variations that can be contrived from the combination of such components.

BRIEF DESCRIPTION OF THE DRAWINGS

FIG. 1A shows a schematic plan view for describing problems of a flow rate sensor of Japanese Unexamined Patent Publication No. 2007-212199, and FIG. 1B shows a schematic cross-sectional view;

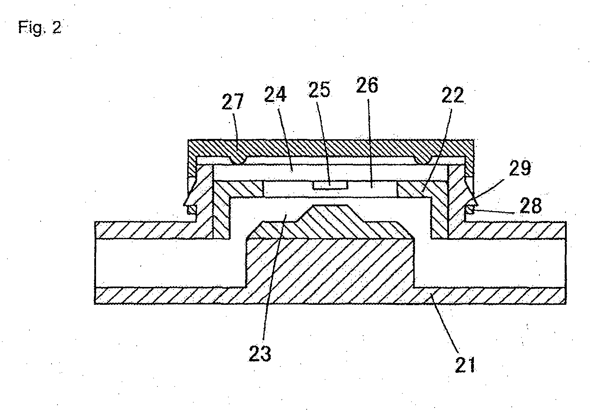

FIG. 2 shows a schematic cross-sectional view for describing problems of a flow rate sensor of US Patent No. 665207;

FIG. 3 shows a schematic cross-sectional view showing a case of adhering a substrate and a flow path member with an adhesive;

FIG. 4 shows a perspective view showing a flow rate sensor according to a first embodiment of the present invention;

FIGS. 5A and 5B show a plan view and a bottom view of the flow rate sensor of the first embodiment;

FIGS. 6A, 6B, and 6C show a front view, a rear view, and a side view of the flow rate sensor of the first embodiment;

FIG. 7 shows an exploded perspective view of the flow rate sensor of the first embodiment seen from diagonally above;

FIG. 8 shows an exploded perspective view of the flow rate sensor of the first embodiment seen from diagonally below;

FIG. 9 shows a cross-sectional view taken along line X1-X1 of FIG. 5A;

FIG. 10 shows a cross-sectional view taken along line X2-X2 of FIG. 5A;

FIG. 11A shows a perspective view of a state, cut along line Y1-Y1 of FIG. 5A, and FIG. 11B is a cross-sectional view taken along line Y1-Y1 of FIG. 5A;

FIG. 12A shows a perspective view of a state, cut along line Y2-Y2 of FIG. 5A, and FIG. 12B shows a cross-sectional view taken along line Y2-Y2 of FIG. 5A;

FIG. 13 shows a schematic view describing the basic configuration of the sensor chip;

FIG. 14 shows a perspective view describing an assembly procedure of the flow rate sensor of the first embodiment;

FIG. 15 shows a partially cut perspective view describing the assembly procedure of the flow rate sensor of the first embodiment;

FIGS. 16A, 16B, and 16C show schematic views describing the assembly procedure of the flow rate sensor of the first embodiment;

FIGS. 17A, 17B, and 17C show schematic views describing an assembly procedure of the flow rate sensor of the first embodiment in which the length of the lower boss, or the like is different;

FIGS. 18A and 18B each show side views showing a chamfer arranged at the lower surface of the distal end of a substrate holder;

FIGS. 19A and 19B show operation explanatory views of the flow rate sensor of the first embodiment;

FIG. 20 shows a diagram showing a result of conducting a pressure cooker test performed using the flow rate sensor of the prior art and the flow rate sensor of the first embodiment;

FIGS. 21A and 21B each show perspective views for describing a variant of a cover;

FIG. 22 shows a perspective view of a base used in a flow rate sensor according to a second embodiment;

FIGS. 23A, 23B, and 23C show schematic views describing an assembly procedure of the flow rate sensor of the second embodiment;

FIG. 24 shows an exploded perspective view of a flow rate sensor according to a third embodiment of the present invention;

FIG. 25A shows a cross-sectional view of the flow rate sensor of the third embodiment, and FIG. 25B shows a cross-sectional view taken along line Z1-Z1 of FIG. 25A;

FIG. 26 shows a perspective view showing a flow rate sensor according to a fourth embodiment;

FIG. 27A shows a plan view of the flow rate sensor of the fourth embodiment, and FIG. 27B shows a cross-sectional view taken along line Z2-Z2 of FIG. 27A;

FIG. 28 shows a perspective view from the rear surface side showing a flow rate sensor according to a fifth embodiment; and

FIG. 29A shows a plan view of the flow rate sensor of the fifth embodiment, and FIG. 29B shows a cross-sectional view taken along line Z3-Z3 of FIG. 29A.

DETAILED DESCRIPTION

Preferred embodiments of the present invention will now be described below with reference to the accompanying drawings.

(First Embodiment)

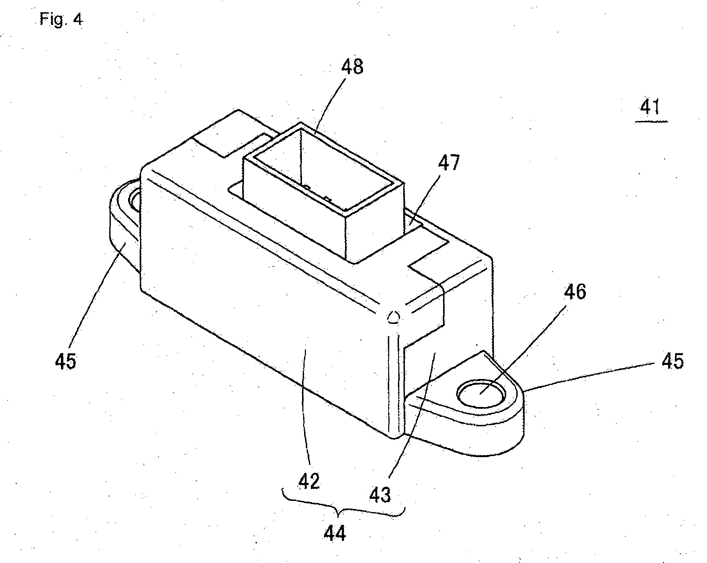

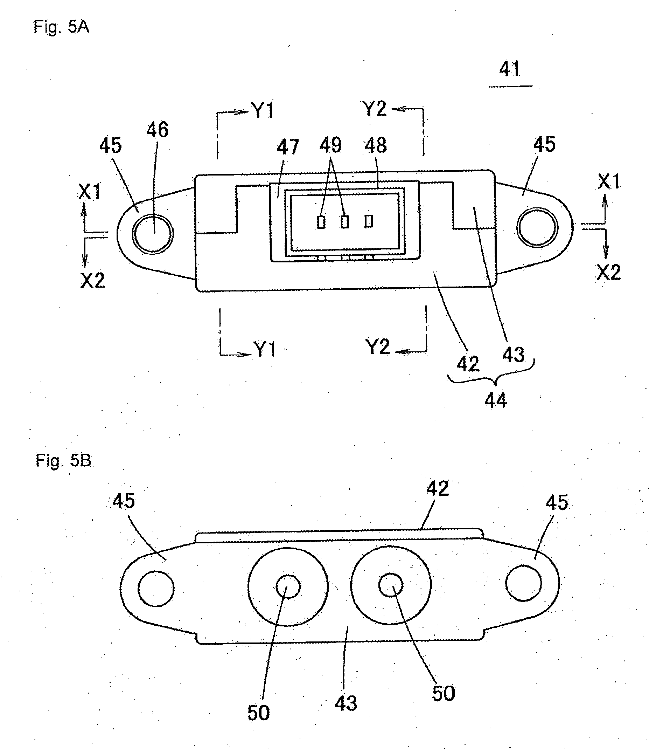

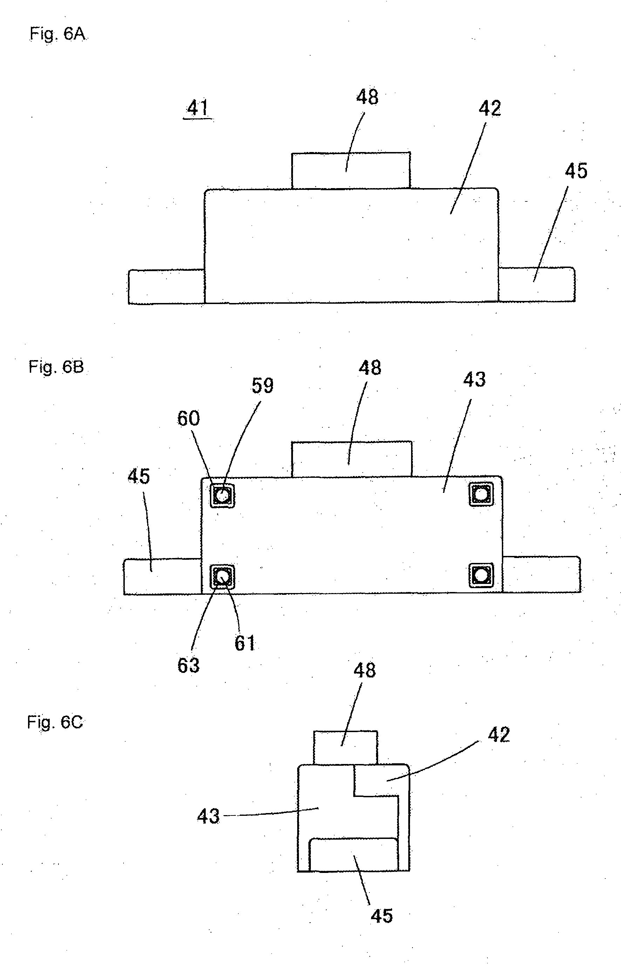

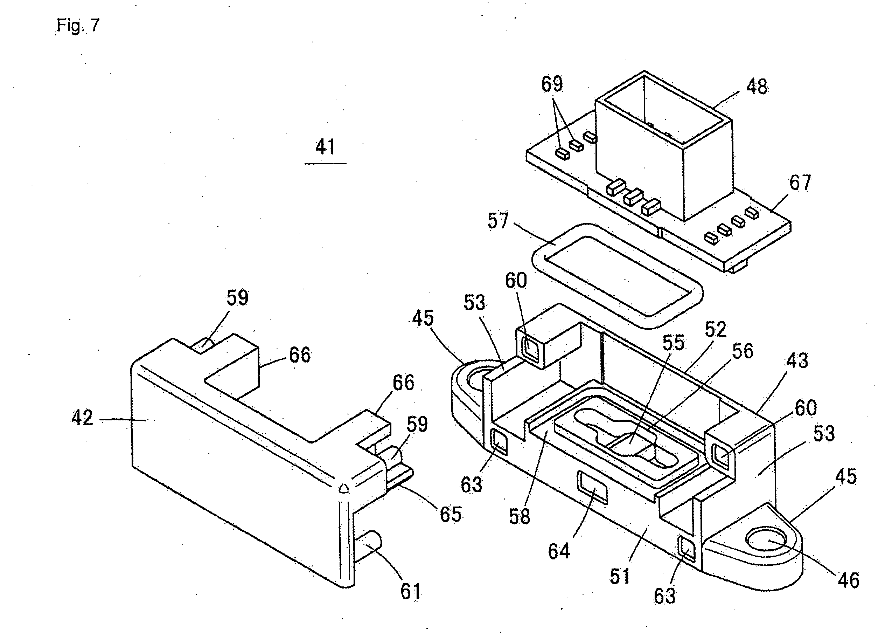

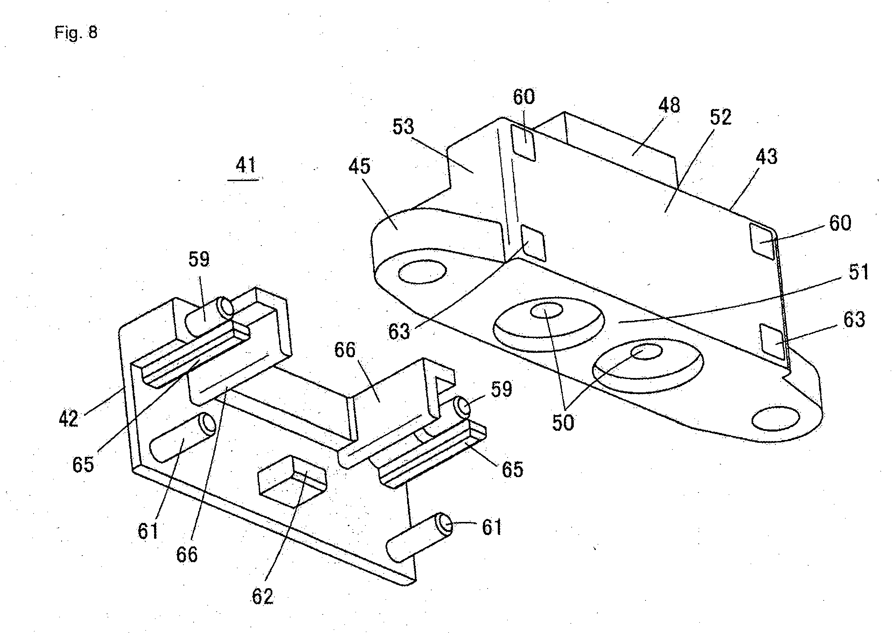

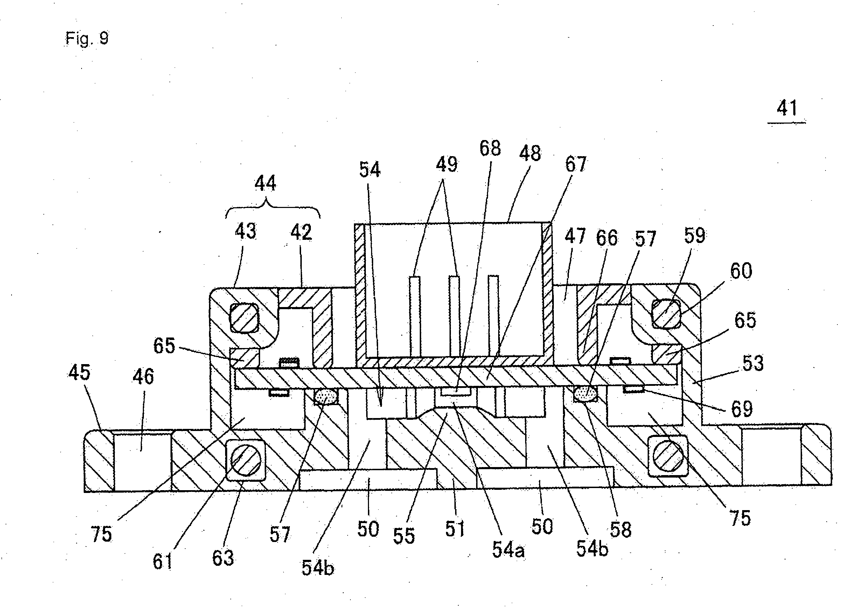

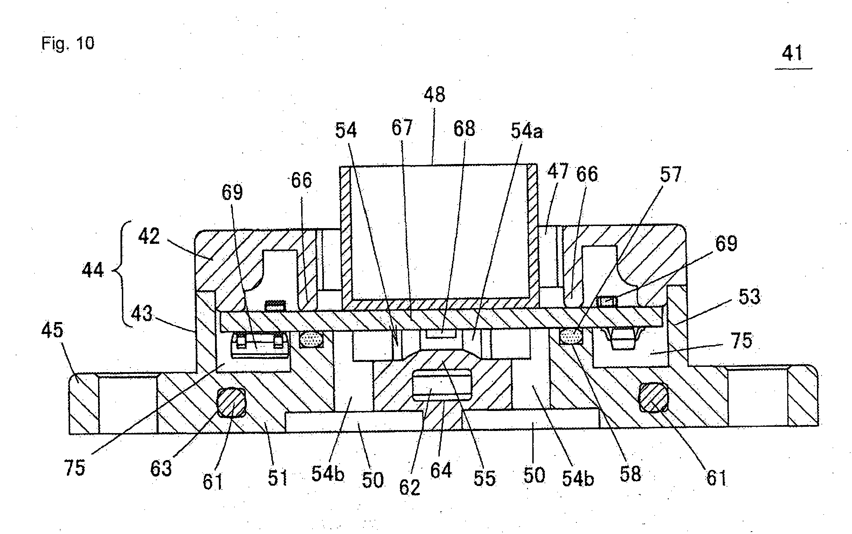

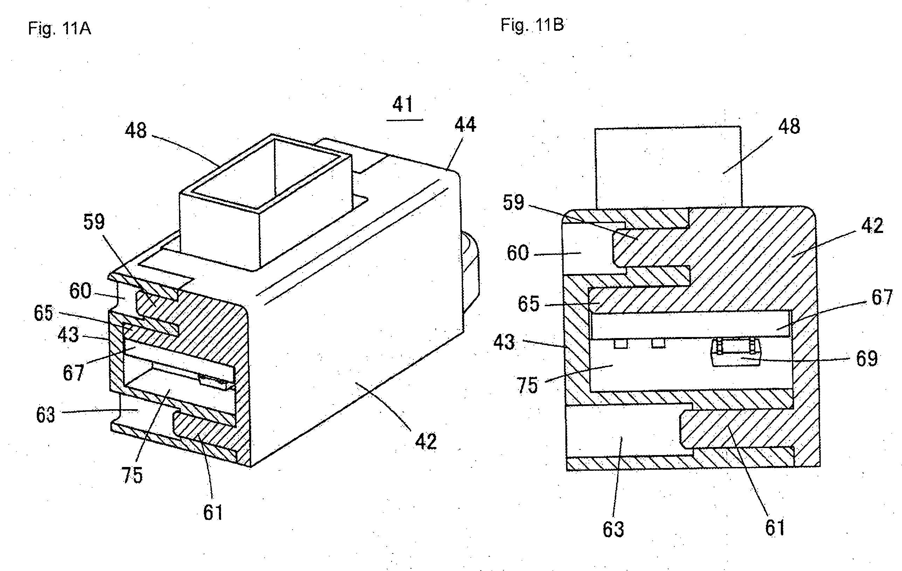

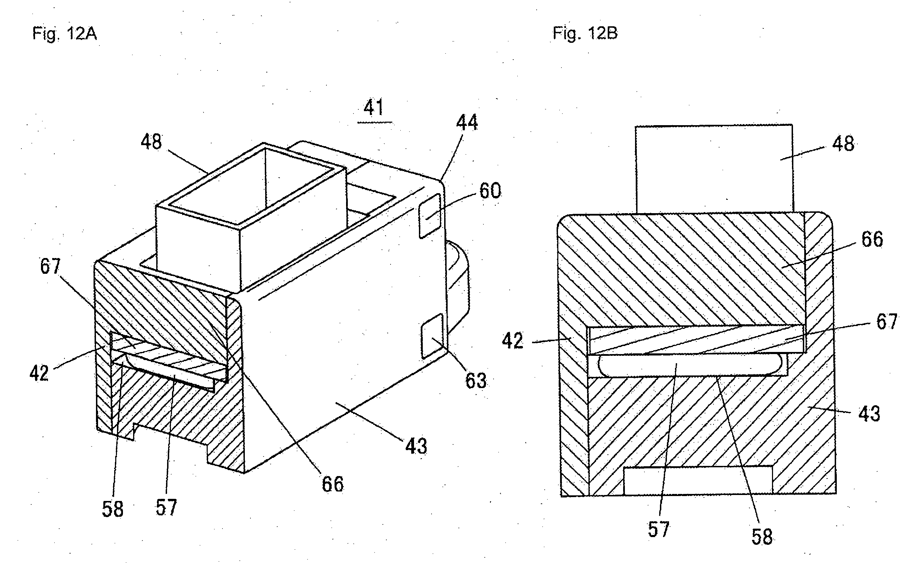

First embodiment of the present invention will be described below with reference to FIG. 4 to 20. FIG. 4 shows a perspective view showing a flow rate sensor 41 according to the first embodiment of the present invention. FIGS. 5A and 5B show a plan view and a bottom view of the flow rate sensor 41, and FIGS. 6A, 6B, and 6C show a front view, a rear view, and a side view of the flow rate sensor 41. FIG. 7 shows an exploded perspective view of the flow rate sensor 41 seen from diagonally above. FIG. 8 shows an exploded perspective view of the flow rate sensor 41 seen from diagonally below. FIG. 9 shows a cross-sectional view taken along line X1-X1 of FIG. 5A, and FIG. 10 shows a cross-sectional view taken along line X2-X2 of FIG. 5A. FIG. 11A shows a perspective view of a state, cut along line Y1-Y1 of FIG. 5A, and FIG. 11B is a cross-sectional view taken along line Y1-Y1 of FIG. 5A. FIG. 12A shows a perspective view of a state, cut along line Y2-Y2 of FIG. 5A, and FIG. 12B shows a cross-sectional view taken along line Y2-Y2 of FIG. 5A.

The outer appearance of the flow rate sensor 41 is configured by a housing 44 including a cover 42 and a base 43, where a leg portion 45 is arranged on the side surfaces of the base 43, and a through hole 46 for fixing the flow rate sensor 41 with a screw, or the like is opened in the leg portion 45, as shown in FIG. 4, FIGS. 5A and 5B, and FIGS. 6A, 6B, and 6C. A signal retrieving connector 48 projects out from a window 47 formed between the cover 42 and the base 43 at the upper surface of the flow rate sensor 41, and a terminal 49 is arranged in the connector 48. A pair of fluid introducing ports 50 is opened at the lower surface of the flow rate sensor 41. The thickness in the front and back direction of the housing 44 is about 10 mm, and the horizontal width of the portion excluding the leg portion 45 is about 25 mm and the height is about 10 mm.

As shown in FIG. 7, the base 43 is configured by a seat portion 51, the leg portion 45, a rear wall portion 52 vertically standing at the upper part of the rear surface of the seat portion 51, and a side wall portion 53 vertically standing at the boundary between the seat portion 51 and the leg portion 45. As shown in FIGS. 9 and 10, a reverse U-shaped fluid flow path 54 is formed in the base 43, which fluid flow path 54 is configured by a vertical flow path 54b having the lower end connected to the fluid introducing port 50 of the bottom surface, and a horizontal flow path 54a communicating the upper ends of the left and right vertical flow paths 54b. A projection 55 for partially narrowing the flow path cross-sectional area of the horizontal flow path 54a is arranged at the bottom surface of the horizontal flow path 54a, and a measurement window 56 passing through the horizontal flow path 54a is opened to the upper surface of the base 43. A recessed area 58 for fitting in an annular seal member 57 having elasticity such as an O-ring is formed at the upper surface (substrate installing surface) of the seat portion 51 so as to surround the periphery of the measurement window 56, where the depth of the recessed area 58 is shallower than the thickness of the seal member 57.

A press-fit hole 60 for press fitting an upper boss 59 of the cover 42 is arranged at the upper ends of the left and right side wall portions 53. Press-fit holes 63, 64 for press fitting lower bosses 61, 62 of the cover 42 are formed at the front surface of the seat portion 51. The press-fit holes 60, 63, 64 are horizontally opened in the front and back direction of the base 43. In the illustrated example, the upper boss 59 and the press-fit hole 60 are in two sets, the lower boss 61 and the press-fit hole 63 are in two sets, and the lower boss 62 and the press-fit hole 64 are in one set, but the numbers may be arbitrary as long as the cover 42 and the base 43 can be securely coupled and integrated. The press-fit holes 60, 63 have the last half portion slightly larger in inner diameter than the front half portion, so that the press-fit resistance of the upper boss 59 and the lower boss 61 is reduced.

As shown in FIG. 8, at the cover 42, the upper boss 59 projects out horizontally from the left and right upper parts of the inner surface, the lower boss 61 projects out horizontally from the left and right lower parts of the inner surface, and the lower boss 62 projects out horizontally from the lower part at the center of the inner surface. The outer periphery of the distal end of the upper boss 59 and the lower boss 61 is subjected to chamfering to obtain a tapered shape, and the edges of the press-fit holes 60, 63 are chamfered to a mortar shape, and thus the upper boss 59 and the lower boss 61 can be smoothly inserted to the respective press-fit hole 60, 63. The upper edge and the lower edge of the distal end of the lower boss 62 are subjected to chamfering, and the edge of the press-fit hole 64 is also subjected to chamfering to a mortar shape, and thus the lower boss 62 can also be smoothly inserted to the press-fit hole 64.

A rod-shaped substrate holder 65 projects out from both sides of the inner surface of the cover 42, and a substrate holder 66 having a cross section of a reverse L-shape projects out to the inner side. The lower surface of the substrate holder 65 and the lower end face of the substrate holder 66 are aligned to the same height. As hereinafter described, when the upper boss 59 and the lower bosses 61, 62 are press fit to the respective press-fit holes 60, 63, 64 to combine the cover 42 and the base 43, the cover 42 and the base 43 fit together thereby forming the housing 44 for accommodating a circuit substrate 67, and the window 47 for projecting out the connector 48 is formed at the upper surface.

The circuit substrate 67 is appropriately formed with a wiring pattern, where a sensor chip 68 for measuring the flow rate, the flow velocity, and the like of the fluid is mounted at the central part of the lower surface of the circuit substrate 67, and an electronic component 69 for power supply, heater control, output amplification, or the like is surface mounted on the circuit substrate 67. The connector 48 is arranged at the central part of the upper surface of the circuit substrate 67, and the terminal 49 of the connector 48 is electrically connected to the circuit of the circuit substrate 67. The circuit substrate 67 is desirably a substrate for surface mounting that does not have a through-hole on the inner side of at least the seal member 57.

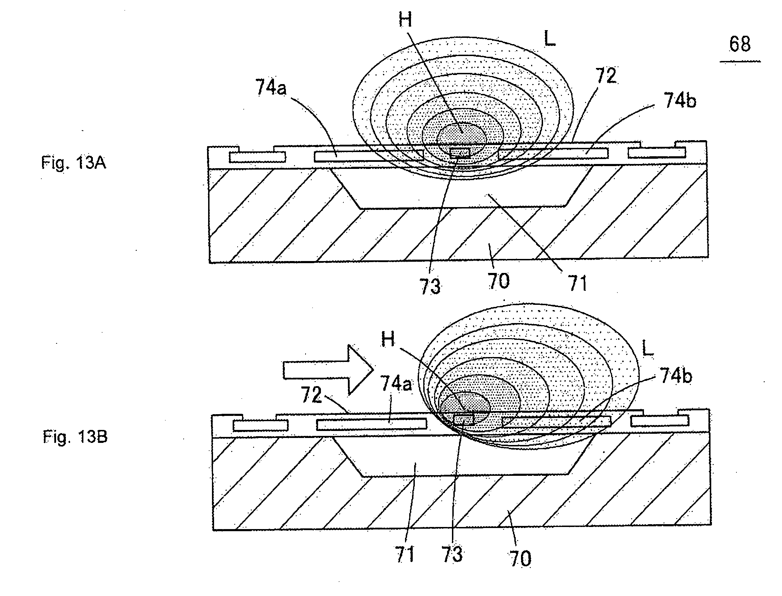

FIG. 13 shows a schematic cross-sectional view describing the basic configuration of the sensor chip 68. Reference numeral 70 designates a sensor substrate including a silicon substrate, where a space 71 is depression formed at the upper surface of the sensor substrate 70, and a diaphragm (thin film) 72 is formed on the upper surface of the sensor substrate 70 so as to cover the space 71. A heat generating heater 73 is arranged at the central part of the region positioned above the space 71 of the diaphragm 72, and temperature measurement resistive elements 74a, 74b are formed on both sides of the heater 73 along the direction the fluid flows. During the measurement operation, the heater 73 is turned ON thereby generating heat, and temperature distribution generates at the periphery of the heater 73. That is, the temperature gradually lowers the farther away from the heater 73, where the side close to the heater 73 is the high temperature side H and the side distant from the heater 73 is the low temperature side L. If the flow of fluid along the surface of the sensor chip 68 does not exist, the temperature distribution of the periphery of the heater 73 is symmetric, as shown in FIG. 13A, and the detected temperatures of the temperature measurement resistive elements 74a, 74b on both sides are equal. If the flow of fluid exists in the direction of the arrow as shown in FIG. 13B, the heat of the heater 73 is carried from windward side to the leeward side by the fluid, and thus the measurement temperature of the temperature measurement resistive element 74b on the leeward side becomes higher than the measurement temperature of the temperature measurement resistive element 74a on the windward side. Furthermore, the difference in measurement temperatures of both temperature measurement resistive elements 74a, 74b becomes larger the larger the flow rate or the flow velocity of the fluid. Thus, the flow rate or the flow velocity of the fluid flowing to the fluid flow path 54 can be measured based on the measurement temperatures of both temperature measurement resistive elements 74a, 74b. The sensor chip 68 is mounted on the lower surface of the circuit substrate 67 by turning up side down the sensor chip having the structure shown in FIG. 13.

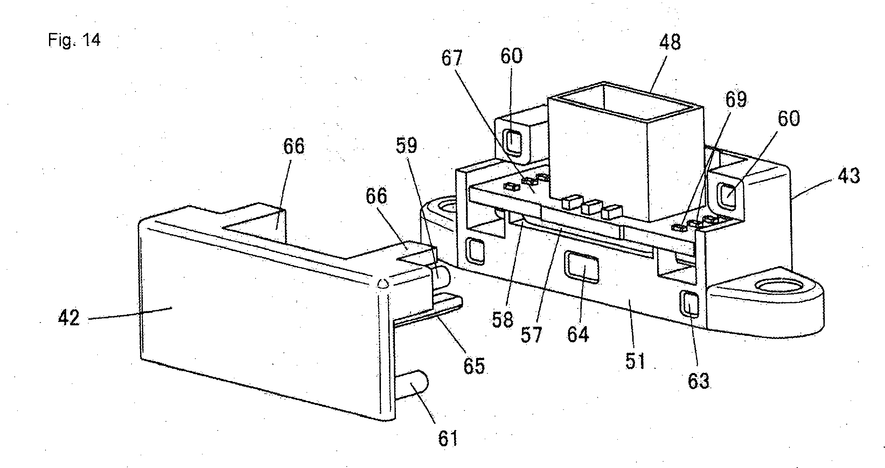

The assembly procedures of the flow rate sensor 41 will be described with reference to FIGS. 7, 14, and 15. In assembling the flow rate sensor 41, the annular seal member 57 is first fitted into the recessed area 58 at the periphery of the measurement window 56, as shown in FIG. 7. Then, as shown in FIG. 14, the circuit substrate 67 is arranged horizontally on the upper surface of the seat portion 51 from the upper side so as to sandwich the seal member 57 between the seat portion 51 and the circuit substrate 67. In this state, the circuit substrate 67 is placed on the seal member 57, and is slightly lifted up from the upper surface (substrate installing surface) of the seat portion 51. The sensor chip 68 on the lower surface is positioned in the measurement window 56 and is faced to the interior of the horizontal flow path 54a.

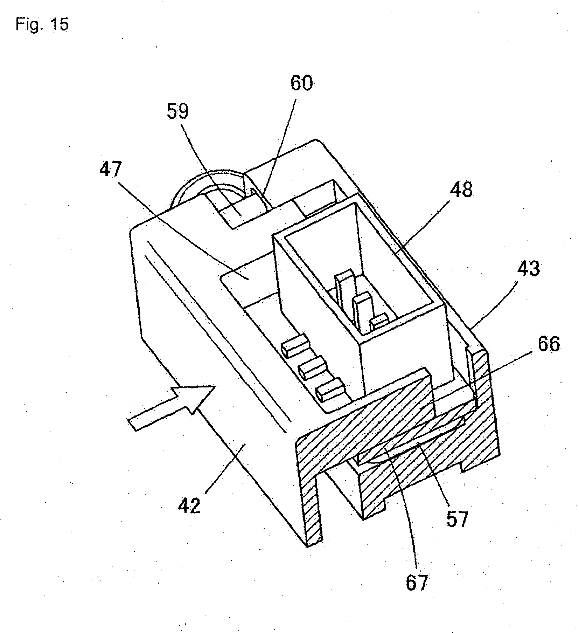

After superimposing the seal member 57 and the circuit substrate 67 on the base 43, as shown in FIG. 15 the cover 42 is pushed horizontally (parallel to the upper surface of the circuit substrate 67) towards the base 43 as shown with the arrow with the circuit substrate 67 held down with the substrate holder 65 and the substrate holder 66 and the seal member 57 in a crushed state, and then the upper boss 59, and the lower bosses 61, 62 of the cover 42 are respectively pushed into the press-fit holes 60, 63, 64 of the base 43 from the horizontal direction to couple and integrate the cover 42 and the base 43 thereby assembling the flow rate sensor 41.

In the flow rate sensor 41 assembled in this manner, the circuit substrate 67 is held downward by the substrate holder 65 and the substrate holder 66, and the seal member 57 is crushed between the circuit substrate 67 and the seat portion 51 to seal between the circuit substrate 67 and the seat portion 51 at the periphery of the measurement window 56. Since the circuit substrate 67 and the seal member 57 are sandwiched between the substrate holders 65, 66 and the seat portion 51, the circuit substrate 67 is held in the housing 44 without rattling. The horizontal width of the circuit substrate 67 is substantially equal to the distance between the inner surfaces of the side wall portions 53 of the base 43, and the length in the front and back direction of the circuit substrate 67 is substantially equal to the distance between the inner surface of the rear wall portion 52 and the inner surface of the seat portion 51, and thus the circuit substrate 67 is positioned substantially in place when mounted on the upper surface of the seat portion 51, and the sensor chip 68 on the lower surface is also positioned substantially in place in the measurement window 56.

The assembly method of the flow rate sensor 41 is roughly described above, where the specific assembly method differs depending on the length of the substrate holders 65, 66, and the upper boss 59 and the lower bosses 61, 62, as described below. Here, assuming the position of the front end face of the circuit substrate 67 mounted on the upper surface of the seat portion 51 is substantially aligned with the front surface of the seat portion 51, the horizontal distance from the front surface of the seat portion 51 to the front end of the press-fit hole 60 is A. At the cover 42, the front end of the upper boss 59 is retracted by B in the horizontal direction from the front end of the substrate holders 65, 66 (if front end of upper boss 59 is projected out than the front end of the substrate holder 65, 66, the horizontal distance B takes a negative value), and the front end of the lower boss 61 is retracted by C in the horizontal direction from the front end of the substrate holders 65, 66 (if front end of lower boss 61 is projected out than the front end of the substrate holders 65, 66, the horizontal distance C takes a negative value). The lower boss 62 is relatively short, and is press fit to the press-fit hole 64 the last.

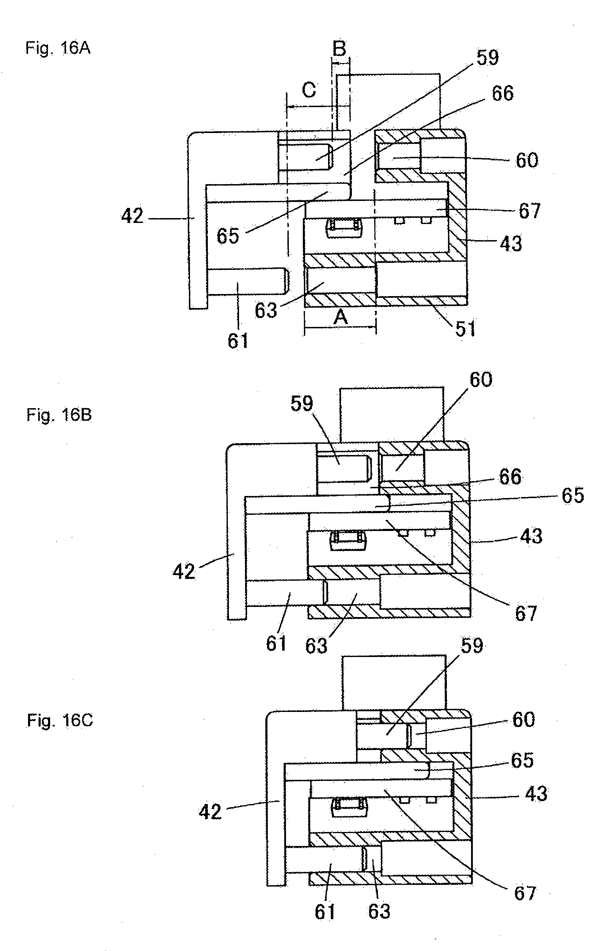

FIG. 16 shows a case where the relationship among the horizontal distances A, B, and C is

$$-B < A$$

$$C > 0$$

$$C\text{-}B < A$$

In this case, the upper surface of the circuit substrate 67 is held down by the lower surfaces of the substrate holders 65, 66 to crush the seal member 57, and the cover 42 is pushed horizontally so as to slide the substrate holders 65, 66 along the upper surface of the circuit substrate 67, as shown in FIG. 16A, and the lower boss 61 is press fit into the press-fit hole 63 as shown in FIG. 16B. The cover 42 is then further pushed horizontally, and the upper boss 59 is press fit into the press-fit hole 60 as shown in FIG. 16C. Finally, the lower boss 62 is press fit into the press-fit hole 64 to exactly fit the cover 42 and the base 43 together, whereby the assembly of the flow rate sensor 41 is terminated.

If the above relationship is satisfied, the operation of holding down the circuit substrate 67 with the substrate holders 65, 66, the operation of press fitting the lower boss 61 to the press-fit hole 63, and the operation of press fitting the upper boss 59 to the press-fit hole 60 can be performed in order and not at the same time, and thus the assembly of the flow rate sensor 41 can be easily carried out. If C-B > A in place of the relationship of C-B < A, the assembly is performed in the order of operation of holding down the circuit substrate 67 with the substrate holders 65, 66, the operation of press fitting the upper boss 59 to the press-fit hole 60, and the operation of press fitting the lower boss 61 to the press-fit hole 63.

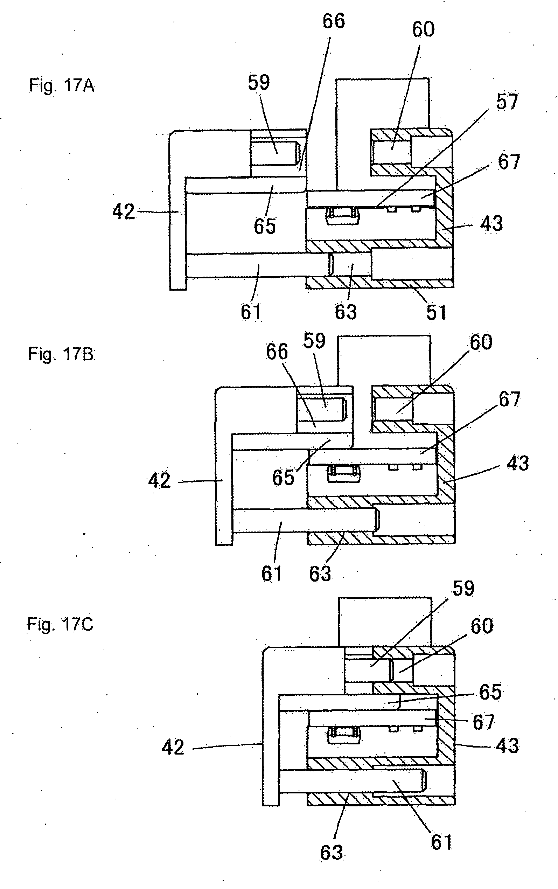

FIG. 17 shows a case where the relationship among the horizontal distances A, B, and C is,

$$-B < A$$

$$C < 0$$

$$C\text{-}B < A$$

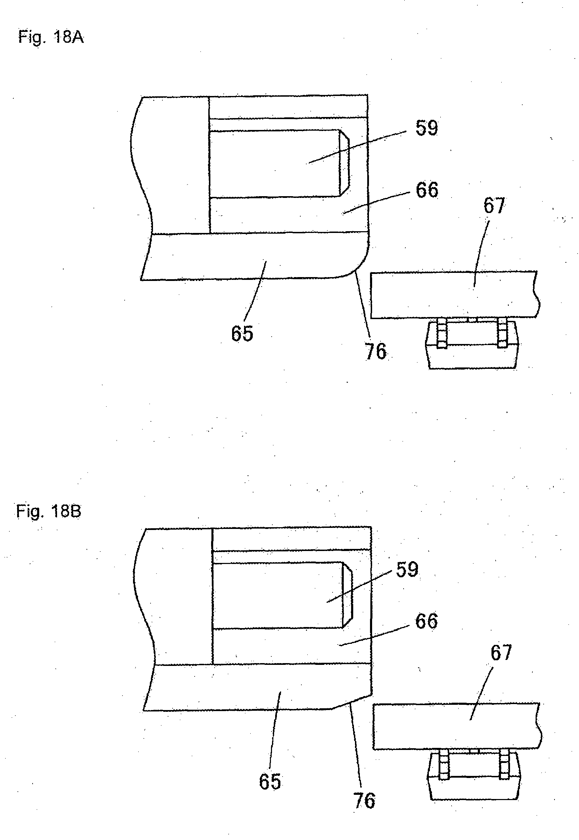

(third equation can be derived from the first equation and the second equation, and thus only the conditions of the first equation and the second equation need to be met). In this case, the distal end of the lower boss 61 is first press fit into the press-fit hole 63, as shown in FIG. 17A. The cover 42 is then pushed in the horizontal direction to have the substrate holders 65, 66 ride on the upper surface of the circuit substrate 67 from the distal end side, and the circuit substrate 67 is held downward with the substrate holders 65, 66 as shown in FIG. 17B. Before the distal ends of the substrate holders 65, 66 ride on the circuit substrate 67, the circuit substrate 67 is lifted from the upper surface of the seat portion 51 by the crushed amount of the seal member 57, but since the lower surfaces of the distal ends of the substrate holders 65, 66 are performed with circular-arc shaped chamfering 76 as shown in FIG. 18A or inclination surface-shaped chamfering 76 as shown in FIG. 18B, the substrate holders 65, 66 smoothly ride on the circuit substrate 67 without being caught at the circuit substrate 67 by being guided by the chamfer 76 of the substrate holder 65, and the circuit substrate 67 is held down and the seal member 57 is elastically crushed when the cover 42 is horizontally sled. Furthermore, the cover 42 is pushed in horizontally, and the upper boss 59 is press fit into the press-fit hole 60 as shown in FIG. 17C. Finally, the lower boss 62 is press fit into the press-fit hole 64 to exactly fit the cover 42 and the base 43, whereby the assembly of the flow rate sensor 41 is terminated. If the above relationship is satisfied, the operation of press fitting the lower boss 61 to the press-fit hole 63, the operation of holding down the circuit substrate 67 with the substrate holders 65, 66, and the operation of press fitting the upper boss 59 to the press-fit hole 60 can be performed in order, and thus the assembly of the flow rate sensor 41 can be easily carried out. Furthermore, the position of the cover 42 in the up and down direction is determined by press fitting the lower boss 61 to the press-fit hole 63 at the beginning, where if the cover 42 is pushed-in in such a state, the force of horizontally pushing in the cover 42 is converted to the force of holding down the circuit substrate 67 of the substrate holders 65, 66, and the pushing force acts on the circuit substrate 67 from when the distal ends of the substrate holders 65, 66 ride on the edge of the circuit substrate 67, whereby the assembly of the flow rate sensor 41 is more facilitated.

The lengths of the upper boss 59, the lower boss 61, and the substrate holder 65, 66 may be appropriately differed other than in the above example. For instance, the upper boss 59 and the lower boss 61 may be simultaneously fitted into the press-fit holes 60, 63, or the upper boss 59 may be formed longer so that the upper boss 59 is fitted into the press-fit hole 60 first.

The flow rate sensor 41 assembled as above has a structure shown in FIGS. 9 to 12B. The cover 42 and the base 43 are coupled from the horizontal direction by press fitting the horizontal upper boss 59 and the lower bosses 61, 62 to the horizontal press-fit holes 60, 63, 64, and the circuit substrate 67 is sandwiched and held between the cover 42 and the base 43 coupled from both sides. Thus, the cover 42 and the base 43 are coupled to configure a strong housing 44.

The circuit substrate 67 is pushed down vertically by the substrate holders 65, 66 arranged horizontally on the cover of the cover 42 and the base 43 coupled from both sides, thereby crushing the seal member 57. Thus, even if the circuit substrate 67 is biased upward by the elastic reactive force of the seal member 57, the direction of the force received by the circuit substrate 67 and the direction in which the cover 42 and the base 43 are coupled are orthogonal, and thus the cover 42 does not loosen or separate from the base 43 due to the elastic reactive force of the seal member 57, and the strength of the housing 44 becomes stronger.

Since the fluid flow path 54 is formed only in the interior of the base 43 (i.e., fluid flow path 54 is not formed by combining the cover 42 and the base 43), and the measurement window 56 of the fluid flow path 54 is air tightly sealed by the circuit substrate 67 and the seal member 57, the air tightness of the fluid flow path 54 is reliably ensured when the fluid introducing ports 50 at both ends are air tightly connected to an external fluid pipe. The sensor chip 68 arranged at the lower surface of the circuit substrate 67 is positioned in the measurement window 56.

Therefore, when the fluid is introduced from one of the fluid introducing ports 50 into the fluid flow path 54, the flow rate or the flow velocity of the fluid is measured by the sensor chip 68. The sensor chip 68 having the structure of FIGS. 13A and 13B does not have directivity, and thus the fluid may flow in either direction and the two-way detection of the flow rate or the flow velocity becomes possible. In the flow rate measurement, the measurement error becomes large if the air tightness of the fluid flow path 54 is incomplete, but since the air tightness of the fluid flow path 54 can be maintained as below in the flow rate sensor 41, the reliability of the measurement accuracy can be enhanced.

With the flow rate sensor 41 having the structure described above, the substrate holders 65, 66 do not lift up even if the coupling of the cover 42 and the base 43 loosen, whereby the circuit substrate 67 can be reliably pushed no different from before loosening, and the sealability of the fluid flow path 54 can be maintained.

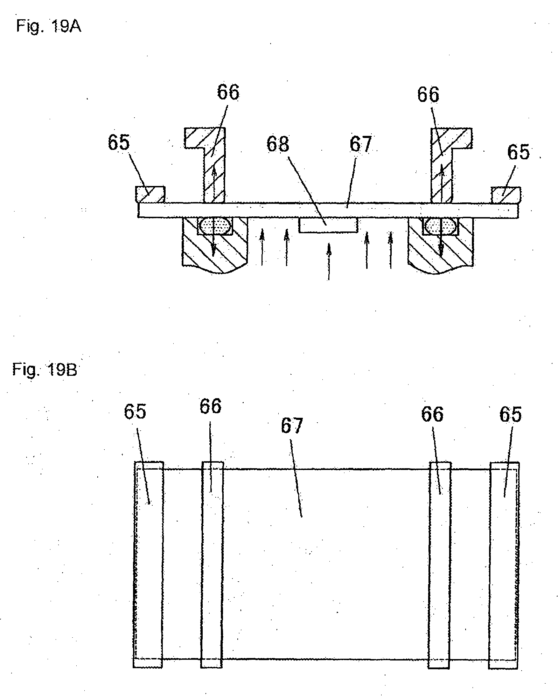

Furthermore, in the flow rate sensor 41, as shown in FIGS. 19A and 19B, the front end to the back end of the circuit substrate 67 is held down in band-shape along the front and back direction by the plurality of substrate holders 65, 66, and thus the elastic reactive force of the seal member 57 and the internal pressure in the fluid flow path 54 can be received by the substrate holders 65, 66, whereby the stress of the circuit substrate 67 can be dispersed and alleviated thereby reducing the deflection of the circuit substrate 67. In particular, since the substrate holder 66 holds down the circuit substrate 67 at immediately above the seal member 57, the deflection of the circuit substrate 67 by the elastic reactive force of the seal member 57 can be more effectively suppressed. The substrate holder 66 is formed to a cross-section of L-shape and has high rigidity, and thus pushes the seal member 57 with a strong force.

As the deflection of the circuit substrate 67 is suppressed in the above manner, the lowering in sealability of the fluid flow path 54 due to the deflection of the circuit substrate 67 is prevented, and breaking of the wiring pattern, formation of cracks in the sensor chip 68, and detachment of the electronic component 69 from the circuit substrate 67 due to the deflection of the circuit substrate 67 are prevented.

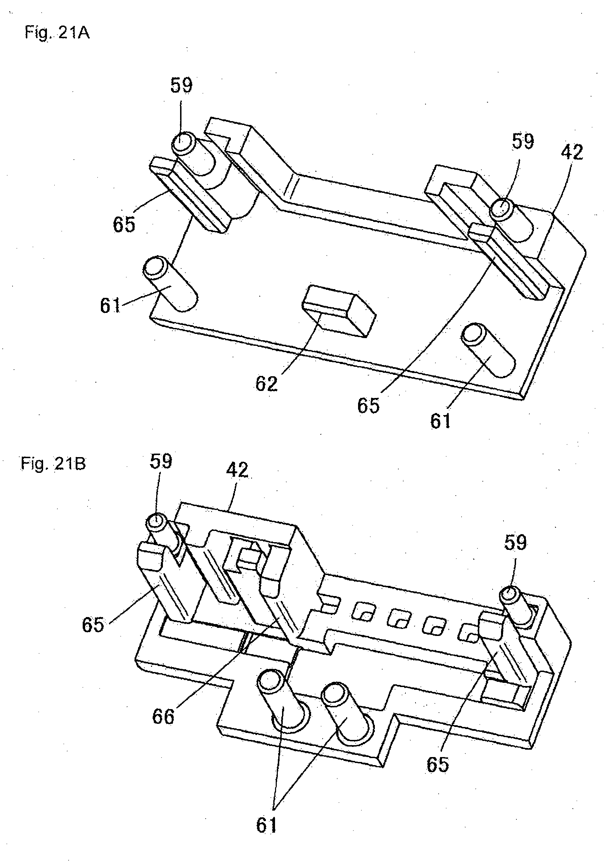

If the internal pressure of the fluid flow path 54 is small and the deflection of the circuit substrate 67 is small, the number of substrate holders may be reduced. For instance, in the variant of the cover 42 shown in FIG. 21A, the substrate holder 66 on the inner side is omitted, and only two substrate holders 65 on both ends are arranged. If the circuit substrate 67 easily deflects by the internal pressure of the fluid flow path 54, the central part of the circuit substrate 67 may be held down by the substrate holder. For instance, in the variant of the cover 42 shown in FIG. 21B, both ends of the circuit substrate 67 are held down by the substrate holder 65 at both ends, and the central part of the circuit substrate 67 most easily influenced by stress is held down with the substrate holder 66 at the middle. In the variant of FIG. 21B, the substrate pushing surface (lower surface) of the substrate holder 66 at the middle is formed to an L-shape, so that part of the edge parallel to the longitudinal direction of the circuit substrate 67 can also be pushed down.

In this flow rate sensor 41, separate components such as a bolt for coupling and integrating the cover 42 and the base 43 are not required, and the flow rate sensor 41 is assembled by sandwiching the circuit substrate 67 between two members (cover 42, base 43) from the horizontal direction, and thus the flow rate sensor 41 can be miniaturized. If the cover 42 and the base 43 are made of resin, the flow rate sensor 41 can be miniaturized and made lighter.

The electronic component 69 mounted on the circuit substrate 67 is arranged at a position not interfering with the substrate holders 65, 66 and the upper surface of the seat portion 51. The screw hole and caulking, adhesive pool, and the like for fixing the circuit substrate 67 are not necessary on the upper surface of the seat portion 51, and the substrate holders 65, 66 are only on the upper surface side of the circuit substrate 67, and thus the electronic component 69 can be mounted on the lower surface of the circuit substrate 67, and furthermore, a depression 75 for avoiding interference with the electronic component 67 mounted on the lower surface of the circuit substrate 67 may be formed on the upper surface of the seat portion 51.

In the flow rate sensor 41, a separate member such as a bolt or an adhesive is not used to assemble the cover 42 and the base 43, and thus the number of components and the assembly man-hours can be reduced, whereby the assembly property of the flow rate sensor 41 is enhanced and the lower cost is achieved.

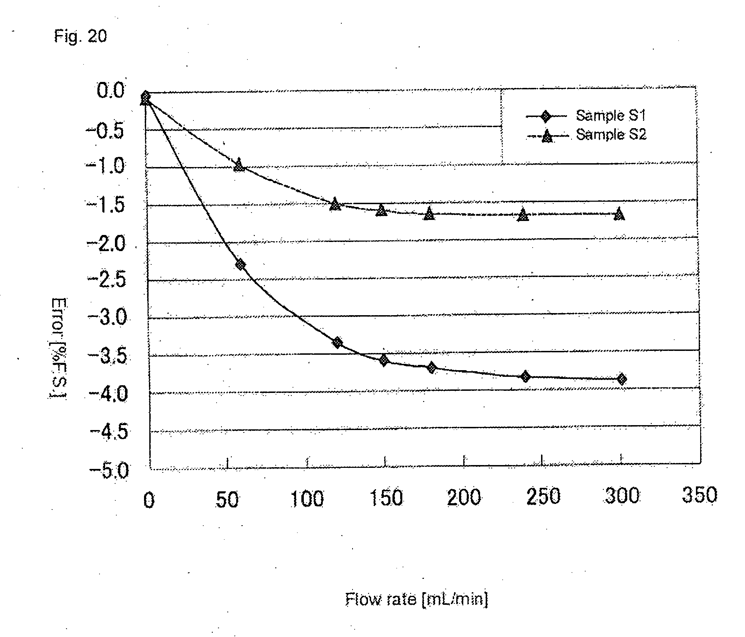

FIG. 20 shows results of conducting a pressure cooker test where the flow rate sensor of a snap-fit type disclosed in US Patent No. 665207 is sample S1 and the flow rate sensor of the first embodiment of the present invention is sample S2. The sample S1 is obtained by attaching the cover to the base from the upper side, and hooking the notch of the cover to the peg of the base to couple the cover and the base, similar to the seal member and the circuit substrate. In the pressure cooker test, the temperature is 105°C, the humidity is 100%RH, and the uncontrolled time (measurement time interval) is 24 hours, where the flow rate of the fluid flowing through the fluid flow path is changed from 0 milliliter/min. to 300 milliliters/min., and the error in the respective measured flow rate was measured. According to the test result, the measurement error is about half of the sample S1 in the sample S2. The maximum dimensional change in the substrate height leading to change in the flow path cross-sectional area in this case is 3.79% in the sample S1 and 0.42% in the sample S2.

Therefore, according to the flow rate sensor 41 of the first embodiment, a flow rate sensor that is compact, and has high reliability and durability can be manufactured.

(Second Embodiment)

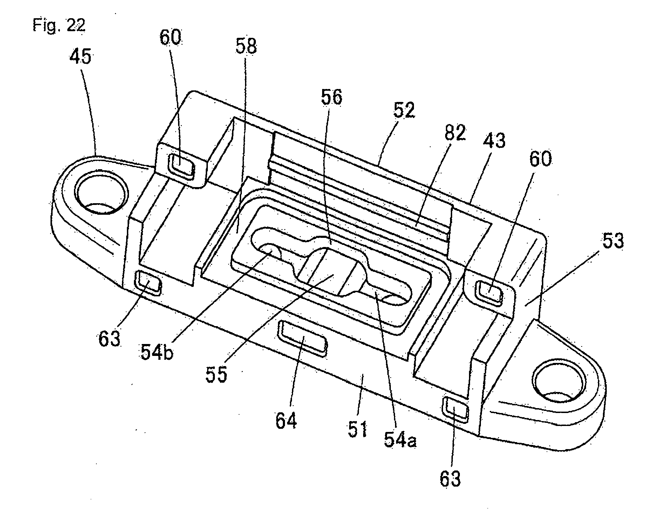

A flow rate sensor according to a second embodiment of the present invention will now be described. In the second embodiment, a horizontal substrate holder 82 for holding down the back end of the circuit substrate 67 is arranged at the inner surface of the rear wall portion 52 of the base 43, as shown in FIG. 22.

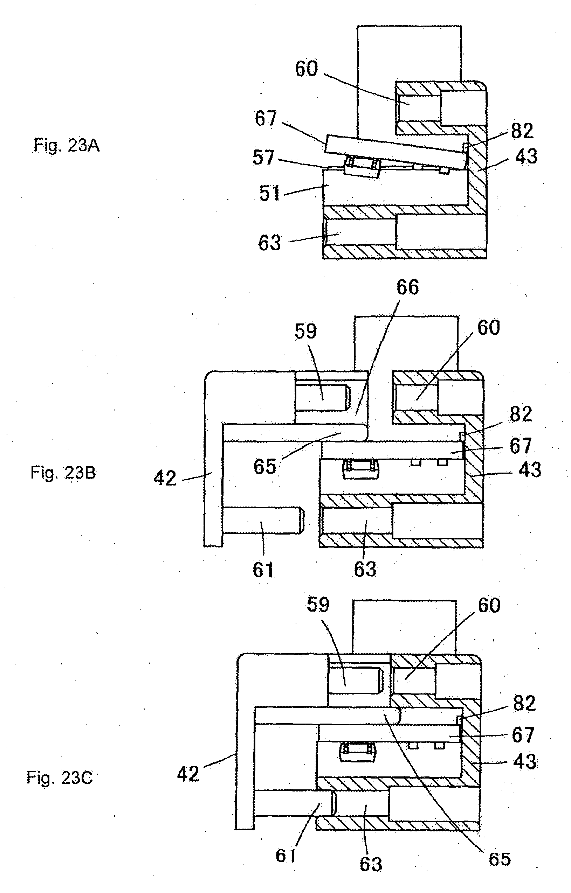

When assembling the flow rate sensor of the second embodiment, the seal member 57 is placed in the recessed area 58 of the seat portion 51, and thereafter, the circuit substrate 67 is overlapped on the seal member 57 so as to insert the back end of the circuit substrate 67 under the substrate holder 82, as shown in FIG. 23A. Then, as shown in FIG. 23B, the cover 42 is horizontally pushed in while holding down the circuit substrate 67 with the substrate holders 65, 66, and as shown in FIG. 23C, the lower boss 61 and the upper boss 59 are sequentially press fit to the press-fit holes 63, 60, respectively, to assemble the flow rate sensor.

According to such a flow rate sensor, the back end of the circuit substrate 67 can also be held down by the substrate holder 82, and thus the circuit substrate 67 is more less likely to distort, and the sensor chip 68 and the electronic component 69 mounted on the circuit substrate 67 are less likely to break.

(Third Embodiment)

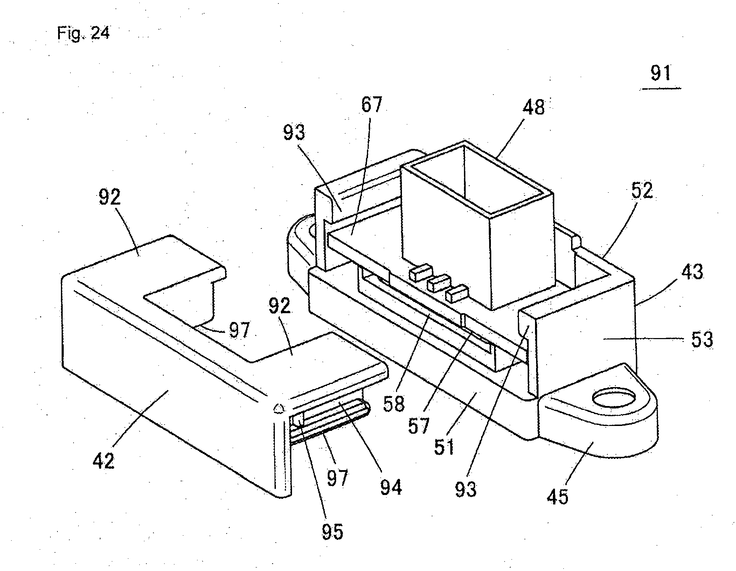

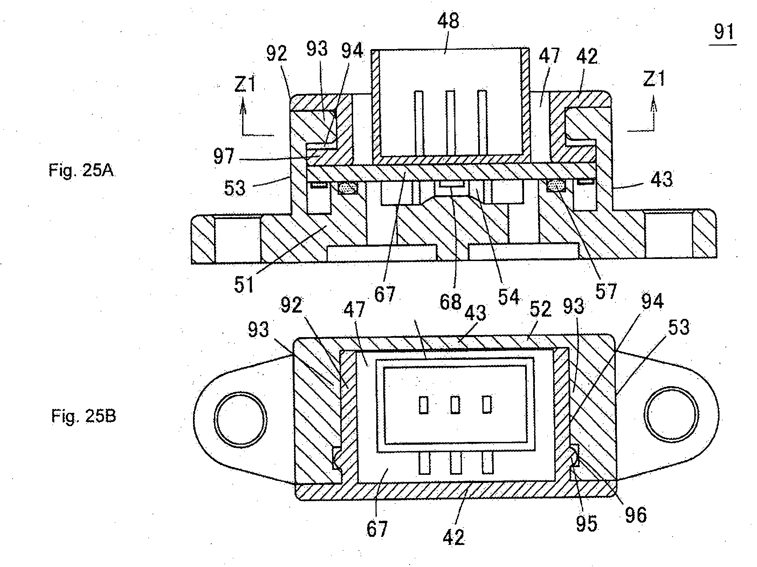

FIG. 24 shows an exploded perspective view of a flow rate sensor 91 according to a third embodiment of the present invention. FIG. 25A shows a cross-sectional view of the flow rate sensor 91, and FIG. 25B shows a cross-sectional view taken along line Z1-21 of FIG. 25A. In the flow rate sensor 91 of the third embodiment, the cover 42 and the base 43 are coupled by a slide rail structure.

At the base 43, a slide rail 93 is horizontally arranged in a projecting manner along the upper end of the inner surface of the side wall portion 53. At the cover 42, a guide arm 92 having a cross-section of a horseshoe shape is horizontally projected out from both side portions on the inner surface, and a guide groove 94 that can engage with the slide rail 93 is formed on the outer side surface of the guide arm 92. The lower surface of the guide arm 92 acts as a substrate holder 97 for holding down the circuit substrate 67. Therefore, in the assembly of the flow rate sensor 91, the seal member 57 is placed in the recessed area 58 of the base 43, and the circuit substrate 67 is overlapped thereon, as shown in FIG. 24. The guide groove 94 and the slide rail 93 are fitted to each other while holding down the circuit substrate 67 with the substrate holder 97, and then the cover 42 is horizontally pushed in to slide the substrate holder 97 along the upper surface of the circuit substrate 67, and the slide rail 93 is inserted to the guide groove 94 and the cover 42 is attached to the base 43.

As shown in FIG. 25B, a locking portion 95 of a projection shape is arranged in the guide groove 94 of the guide arm 92, a recessed-shape lock portion 96 to which the locking portion 95 is fitted in is arranged in the slide rail 93, where the locking portion 95 engages the lock portion 96 to thereby prevent the coupling of the cover 42 and the base 43 from loosening in a state the cover 42 and the base 43 are combined.

The thickness of the slide rail 93 and the groove height of the guide groove 94 may be equal so that the slide rail 93 is exactly inserted into the guide groove 94, but the thickness of the slide rail 93 may be smaller than the groove height of the guide groove 94 to thereby form a gap between the lower surface of the slide rail 93 and the bottom surface of the guide groove 94, as shown in FIG. 25A. Even if the thickness of the slide rail 93 is smaller than the groove height of the guide groove 94, the upper surface of the slide rail 93 contacts the top surface of the guide groove 94 to thereby securely push the circuit substrate 67 with by the substrate holder 97.

In this embodiment, the lower surface of the guide arm 92 including the guide groove 94 acts as the substrate holder 97, but the guide arm 92 and the substrate holder 97 may be separately arranged.

(Fourth Embodiment)

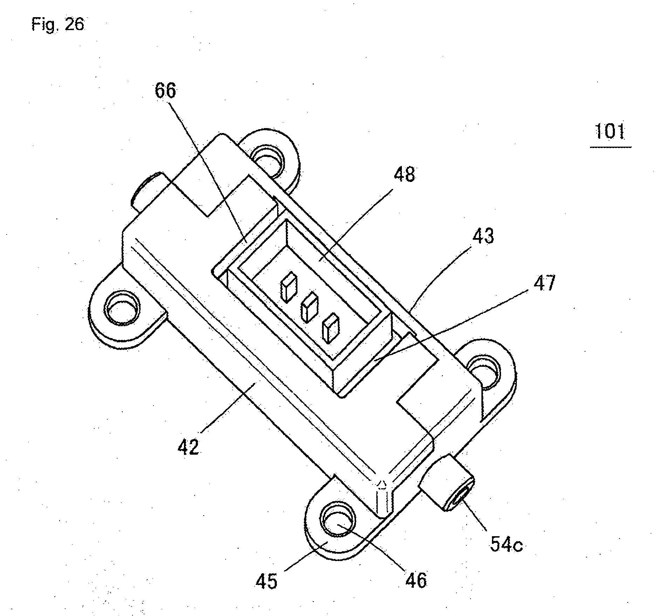

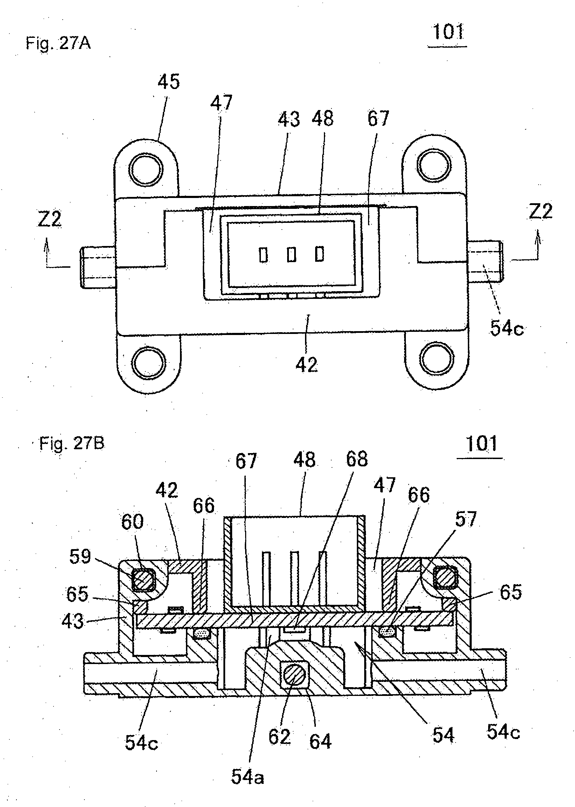

FIG. 26 shows a perspective view showing a flow rate sensor 101 according to a fourth embodiment of the present invention, FIG. 27A shows a plan view thereof, and FIG. 27B shows a cross-sectional view taken along line Z2-Z2 of FIG. 27A. In the flow rate sensor 41 of the first embodiment, both ends of the fluid flow path 54 are the vertical flow path 54b connected to the fluid introducing port 50 at the lower surface, but both ends of the fluid flow path 54 are a horizontal flow path 54c horizontally extending so as to project out from the side surface in the flow rate sensor 101 of the fourth embodiment. Furthermore, the lower boss 61 and the press-fit hole 63 intersect with the horizontal flow path 54c if arranged on both sides of the lower part of the cover 42 and the base 43 as in the first embodiment, and thus the lower boss is only the lower boss 62 at the middle and the press-fit hole at the lower part is also only the press-fit hole 64 at the middle. However, the lower boss 62 is formed long as with the lower boss 61 of the first embodiment to increase the coupling strength with the press-fit hole 64.

This embodiment is useful when the external flow path of the flow rate sensor cannot be connected to the lower surface of the flow rate sensor. Furthermore, the thickness (height) of the flow rate sensor 101 can be reduced since both ends of het fluid flow path 54 extend horizontally.

(Fifth Embodiment)

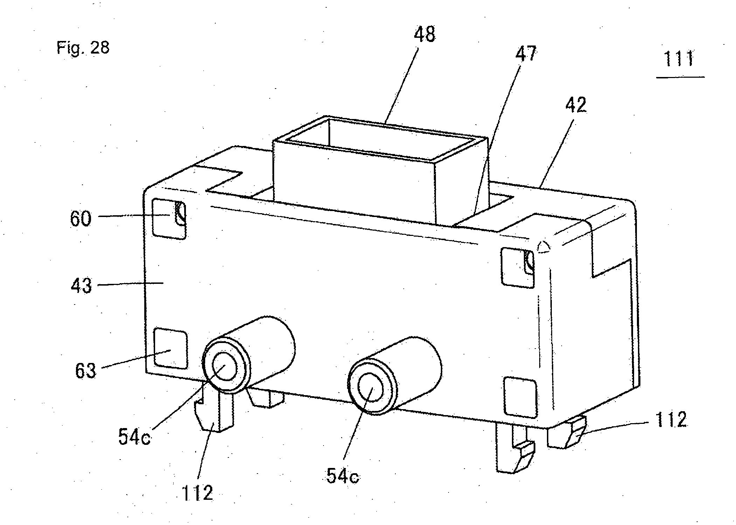

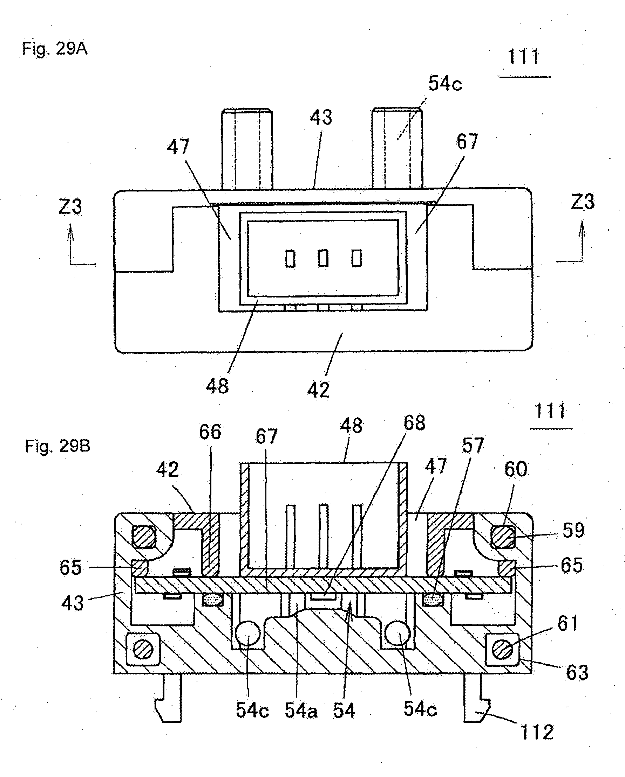

FIG. 28 shows a perspective view from the rear surface side showing a flow rate sensor 111 according to the fifth embodiment of the present invention, FIG. 29A shows a plan view thereof, and FIG. 29B shows a cross-sectional view taken along line Z3-Z3 of FIG. 29A. In the flow rate sensor 111 of the fifth embodiment, both ends of the fluid flow path 54 are the horizontal flow path 54c horizontally extending so as to project out from the rear surface of the base 43. In the flow rate sensor 111, a hook 112 for attaching the flow rate sensor 111 to the equipment is arranged. This embodiment is also useful when the external flow path of the flow rate sensor cannot be connected to the lower surface or the side surface of the flow rate sensor since both ends of the fluid flow path 54 are horizontal.

Conventionally, the flowmeter for industrial machines, which is the mainstream, is robust and expensive, but the flow rate sensor of the present invention provides a flow rate sensor of a simple structure, which is not intended to be used as the flowmeter for industrial machines, which can be easily used due to its compactness and lightness, and which can be manufactured at low cost.

For instance, some mobile equipment such as a laptop are driven using a miniaturized fuel battery instead of an accumulator as in the prior art, but flow rate management of the fuel gas and the air is necessary to enhance the power generating efficiency in such a miniaturized fuel battery. Since the flow rate sensor of the present invention is compact and light, the weight of the miniaturized fuel battery does not increase even if the flow rate sensor of the present invention is incorporated in the miniaturized fuel battery for flow rate measurement of the fuel gas and the air, whereby small incorporation space is merely required, and increase in cost can be suppressed.

In portable environment analyzers such as a handy probe type gas environment analyzer, a pollution degree evaluation device, and a particle counter, the volume of the sampling gas needs to be obtained by measuring the flow rate of the sampling gas to calculate the component concentration (density). If the flow rate sensor of the present invention is used in such application, this contributes to miniaturization and lighter weight of the portable environment analyzer. In addition, incorporation can be made to various equipment such as home medical equipment.

**Claims**

1. A flow rate sensor (41, 91, 101, 111) comprising:

   a base (43) including a fluid flow path (54) on the inside and a substrate installing surface, part of an upper surface of the fluid flow path (54) being opened to the substrate installing surface;
   a seal member (57) mounted on the substrate installing surface so as to surround the opening of the fluid flow path (54);
   a substrate mounted on the seal member (57) and provided to cover the opening of the fluid flow path (54);
   a sensor chip (68) arranged at a lower surface of the substrate so as to face the opening of the fluid flow path (54); and
   a cover (42) attached to the base (43) to configure a housing;

   **characterized in that**
   the cover (42) and the base (43) respectively includes an engagement portion (59, 61, 62, 95) and an engaging portion (60, 63, 64, 96) to be fitted to each other by moving the cover (42) in a direction different from a direction the substrate pushes the seal member (57); and
   the cover (42) includes a substrate holder (65, 66, 97) for pushing the upper surface of the substrate towards the seal member (57).

2. The flow rate sensor (41, 91, 101, 111) according to claim 1, **characterized in that** the engagement portion (59, 61, 62, 95) and the engaging portion (60, 63, 64, 96) are fitted to each other by moving the cover (42) in a direction parallel to the upper surface of the substrate.

3. The flow rate sensor (41, 91, 101, 111) according to claim 1, **characterized in that** a plurality of substrate holders (65, 66, 97) each identical with the substrate holder (65, 66, 97) is arranged on the cover (42).

4. The flow rate sensor (41, 91, 101, 111) according to claim 1, **characterized in that** a lower surface of a distal end of the substrate holder (65, 66, 97) is subjected to chamfering.

5. The flow rate sensor (41, 91, 101, 111) according to claim 1, **characterized in that** at least one part of the engagement portion (59, 61, 62, 95) has a length at which the distal end of the substrate holder (65, 66, 97) contacts the engaging portion (60, 63, 64, 96) before contacting the substrate when attaching the cover (42) to the base (43).

6.  The flow rate sensor (41, 91, 101, 111) according to claim 1, **characterized in that** the substrate holder (65, 66, 97) pushes the substrate at immediately above at least one part of the seal member (57).

7.  The flow rate sensor (41, 91, 101, 111) according to claim 1, **characterized in that** the substrate holder (65, 66, 97) pushes from one side to the other side of the opposing sides of the upper surface of the substrate.

8.  The flow rate sensor (41, 91, 101, 111) according to claim 1, **characterized in that** another substrate holder (82) for holding down the upper surface of the substrate is arranged on an inner surface of the base (43).


**Patentansprüche**

1.  Durchflussmesser (41, 91, 101, 111), aufweisend:

    eine Basis (43), welche einen Fluidströmungspfad (54) auf der Innenseite und eine Fläche zur Anbringung eines Substrats aufweist, wobei ein Teil einer oberen Fläche des Fluidströmungspfads (54) gegenüber der Fläche zur Anbringung des Substrats geöffnet ist;
    ein Dichtungselement (57), welches derart an der Fläche zur Anbringung des Substrats montiert ist, dass es die Öffnung des Fluidströmungspfads (54) umgibt;
    ein Substrat, welches an dem Dichtungselement (57) montiert ist und dazu vorgesehen ist, die Öffnung des Fluidströmungspfads (54) zu bedecken;
    ein Sensorchip (68), welcher derart an einer unteren Fläche des Substrats angeordnet ist, dass er der Öffnung des Fluidströmungspfads (54) zugewandt ist; und
    eine Abdeckung (42), welche derart an der Basis (43) angeordnet ist, dass ein Gehäuse gebildet wird;
    **dadurch gekennzeichnet, dass**
    die Abdeckung (42) bzw. die Basis (43) einen Eingreifabschnitt (59, 61, 62, 95) bzw. einen Eingriffsabschnitt (60, 63, 64, 96) aufweist, die dazu vorgesehen sind, aneinander befestigt zu werden, indem die Abdeckung (42) in eine Richtung bewegt wird, die sich von einer Richtung unterscheidet, in die das Substrat das Dichtungselement (57) drückt; und
    die Abdeckung (42) eine Substrathalterung (65, 66, 97) aufweist, um die obere Fläche des Substrats in Richtung des Dichtungselements (57) zu drücken.

2.  Durchflussmesser (41, 91, 101, 111) nach Anspruch 1, **dadurch gekennzeichnet, dass** der Eingreifabschnitt (59, 61, 62, 95) und der Eingriffsabschnitt (60, 63, 64, 96) aneinander befestigt werden, indem die Abdeckung (42) in eine Richtung parallel zu der oberen Fläche des Substrats bewegt wird.

3.  Durchflussmesser (41, 91, 101, 111) nach Anspruch 1, **dadurch gekennzeichnet, dass** mehrere Substrathalterungen (65, 66, 97), jeweils identisch mit der Substrathalterung (65, 66, 97), an der Abdeckung (42) angeordnet sind.

4.  Durchflussmesser (41, 91, 101, 111) nach Anspruch 1, **dadurch gekennzeichnet, dass** eine untere Fläche eines distalen Endes der Substrathalterung (65, 66, 97) abgeschrägt ist.

5.  Durchflussmesser (41, 91, 101, 111) nach Anspruch 1, **dadurch gekennzeichnet, dass** mindestens ein Teil des Eingreifabschnitts (59, 61, 62, 95) eine Länge aufweist, auf der das distale Ende der Substrathalterung (65, 66, 97) mit dem Eingriffsabschnitt (60, 63, 64, 96) in Kontakt kommt, bevor es mit dem Substrat in Kontakt kommt, wenn die Abdeckung (42) an der Basis (43) angebracht wird.

6.  Durchflussmesser (41, 91, 101, 111) nach Anspruch 1, **dadurch gekennzeichnet, dass** die Substrathalterung (65, 66, 97) gegen das Substrat unmittelbar oberhalb von mindestens einem Teil des Dichtungselements (57) drückt.

7.  Durchflussmesser (41, 91, 101, 111) nach Anspruch 1, **dadurch gekennzeichnet, dass** die Substrathalterung (65, 66, 97) von einer Seite in Richtung der anderen Seite der einander gegenüber liegenden Seiten der oberen Fläche des Substrats drückt.

8.  Durchflussmesser (41, 91, 101, 111) nach Anspruch 1, **dadurch gekennzeichnet, dass** eine andere Substrathalterung (82) zum Niederhalten der oberen Fläche des Substrats an einer inneren Fläche der Basis (43) angeordnet ist.


**Revendications**

1.  Capteur de débit (41, 91, 101, 111) comprenant :

    une base (43) incluant un chemin d'écoulement de fluide (54) à l'intérieur et sur une surface d'installation de substrat, une partie d'une surface supérieure du chemin d'écoulement de fluide (54) étant ouverte vers la surface d'installation de substrat ;
    un élément d'étanchéité (57) monté sur la surface d'installation de substrat afin d'entourer l'ouverture du chemin d'écoulement de fluide (54) ;

un substrat monté sur l'élément d'étanchéité (57) et disposé pour recouvrir l'ouverture du chemin d'écoulement de fluide (54) ;

une puce de capteur (68) agencée au niveau d'une surface inférieure du substrat afin d'être en regard de l'ouverture du chemin d'écoulement de fluide (54) ; et

un couvercle (42) fixé à la base (43) afin de concevoir un boîtier ;

**caractérisé en ce que**

le couvercle (42) et la base (43) incluent respectivement un élément de couplage mâle (59, 61, 62, 95) et un élément de couplage femelle (60, 63, 64, 96) à emboîter l'un dans l'autre par déplacement du couvercle (42) dans une direction différente d'une direction dans laquelle le substrat fait pression sur l'élément d'étanchéité (57) ; et

le couvercle (42) inclut un support de substrat (65, 66, 97) destiné à faire pression sur la surface supérieure du substrat en direction de l'élément d'étanchéité (57).

2. Capteur de débit (41, 91, 101, 111) selon la revendication 1, **caractérisé en ce que** l'élément de couplage mâle (59, 61, 62, 95) et l'élément de couplage femelle (60, 63, 64, 96) sont emboîtés l'un dans l'autre par déplacement du couvercle (42) dans une direction parallèle à la surface supérieure du substrat.

3. Capteur de débit (41, 91, 101, 111) selon la revendication 1, **caractérisé en ce qu'**une pluralité de supports de substrat (65, 66, 97), tous identiques au support de substrat (65, 66, 97), sont agencés sur le couvercle (42).

4. Capteur de débit (41, 91, 101, 111) selon la revendication 1, **caractérisé en ce qu'**une surface inférieure d'une extrémité distale du support de substrat (65, 66, 97) est sujette à un chanfreinage.

5. Capteur de débit (41, 91, 101, 111) selon la revendication 1, **caractérisé en ce qu'**au moins une partie de l'élément de couplage mâle (59, 61, 62, 95) a une longueur sur laquelle l'extrémité distale du support de substrat (65, 66, 97) est en contact avec l'élément de couplage femelle (60, 63, 64, 96) avant de venir en contact avec le substrat lors de la fixation du couvercle (42) à la base (43).

6. Capteur de débit (41, 91, 101, 111) selon la revendication 1, **caractérisé en ce que** le support de substrat (65, 66, 97) fait pression sur le substrat immédiatement au-dessus d'au moins une partie de l'élément d'étanchéité (57).

7. Capteur de débit (41, 91, 101, 111) selon la revendication 1, **caractérisé en ce que** le support de substrat (65, 66, 97) fait pression d'un côté à l'autre sur les côtés opposés de la surface supérieure du substrat.

8. Capteur de débit (41, 91, 101, 111) selon la revendication 1, **caractérisé en ce qu'**un autre support de substrat (82) destiné à maintenir abaissée la surface supérieure du substrat est agencé sur une surface interne de la base (43).

Fig. 1A

Fig. 1B

Fig. 2

Fig. 3

Fig. 4

Fig. 5A

Fig. 5B

Fig. 6A

Fig. 6B

Fig. 6C

Fig. 7

Fig. 8

EP 2 098 832 B1

Fig. 9

Fig. 10

Fig. 11B

Fig. 11A

Fig. 12B

Fig. 12A

Fig. 13A

Fig. 13B

EP 2 098 832 B1

Fig. 14

Fig. 15

Fig. 16A

Fig. 16B

Fig. 16C

Fig. 17A

Fig. 17B

Fig. 17C

Fig. 18A

Fig. 18B

Fig. 19A

66    66
65    68    67    65

Fig. 19B

65    66    67    66    65

Fig. 20

Fig. 21A

Fig. 21B

Fig. 22

Fig. 23A

Fig. 23B

Fig. 23C

Fig. 24

Fig. 25A

Fig. 25B

Fig. 26

Fig. 27A

Fig. 27B

Fig. 28

EP 2 098 832 B1

Fig. 29A

Fig. 29B

**EP 2 098 832 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007212199 A
- US 665207 A
- DE 102004621304 A1
- US 2006137444 A1